# EUROPÄISCHE PATENTSCHRIFT

(11) **EP 2 539 207 B1**
(45) Veröffentlichungstag und Bekanntmachung des Hinweises auf die Patenterteilung: **07.12.2016**
(21) Anmeldenummer: 11705178.9
(22) Anmeldetag: 08.02.2011
(51) Int. Cl.: B62D 15/02, B60W 50/08

(54) **VERFAHREN ZUR UNTERSTÜTZUNG EINES EINPARKVORGANGS**
METHOD TO ASSIST A PARKING MANEUVER
PROCÉDÉ D'ASSISTANCE PENDANT UNE MANOEUVRE DE PARKING

(30) Priorität: 26.02.2010 DE 102010002409
(43) Veröffentlichungstag der Anmeldung: 02.01.2013
(73) Patentinhaber: Robert Bosch GmbH, 70442 Stuttgart (DE)
(72) Erfinder: SCHMITT, Michael, Bosch Corporation 150-0002 (JP); HAGENMEYER, Lorenz, 73760 Ostfildern (DE)
(86) Internationale Anmeldenummer: PCT/EP2011/051779
(87) Internationale Veröffentlichungsnummer: WO 2011/104111

(56) Entgegenhaltungen:
- EP-A1- 1 847 444
- FR-A1- 2 909 964
- US-A- 5 742 141
- US-A1- 2003 045 973

## Beschreibung

Die Erfindung geht aus von einem Verfahren zur Ermittlung und Bewertung einer Parklücke, sowie von einem Computerprogramm und einem Computerprogrammprodukt zur Durchführung desselben gemäß dem Oberbegriff der unabhängigen Patentansprüche.

### Stand der Technik

Zur Unterstützung eines Einparkvorgangs sind verschiedene Fahrerassistenzsysteme bekannt, beispielsweise Parkpiloten, die eine Trajektorie für einen Einparkvorgang berechnen und dem Fahrer jeweils Fahranweisungen zur Durchführung des Einparkvorganges geben. Derartige Fahrerassistenzsysteme verwenden beispielsweise Systeme zur Parklückenvermessung (PLV), die beispielsweise mittels Ultraschallsensoren oder Radarsensoren die Länge und die relative Position einer Parklücke zu dem eigenen Fahrzeug ermitteln und in Abhängigkeit von der Länge des eigenen Fahrzeuges und gegebenenfalls der erforderlichen Trajektorie einen möglichen Einparkvorgang beurteilen.

Aus der Offenlegungsschrift EP 1 685 002 A1 ist ein Verfahren zur Ermittlung einer Parklücke bekannt. Hierzu werden die Verfahrensschritte Vermessen einer Parklücke und Ausgabe einer gemessenen Länge der Parklücke, Vergleichen der ermittelten Länge mit mindestens einem Grenzwert und Ermittlung eines Anzeigesignals, Ausgabe des Anzeigesignals an den Fahrer, Aufnahme von Fahrdynamiksignalen während eines Einparkvorganges, Bewertung des Einparkvorganges auf Grundlage der aufgenommenen Fahrdynamiksignale und Ausgabe eines Bewertungssignals sowie Änderung des mindestens einen Grenzwertes in Abhängigkeit von dem Bewertungssignal und dem Anzeigesignal, während des Einparkvorgangs durchgeführt. Hierdurch wird eine adaptive Parklückenvermessung ermöglicht, bei der eine selbsttätige Anpassung einer Bewertung der Parklückenlänge an das jeweilige Fahrverhalten und Fahrvermögen des betreffenden Fahrers erfolgt, wodurch insbesondere eine hohe Akzeptanz des Parklückenvermessungssystems durch den Fahrer erreicht wird.

Aus US 5,742,141 A ist ein Verfahren zur Unterstützung eines Einparkvorgangs bekannt, bei dem eine Parklücke zunächst durch Sensoren vermessen wird und abhängig von der Länge der Parklücke und der relativen Position des Fahrzeugs zur Parklücke eine optimierte Einparktrajektorie berechnet wird. Während des Einparkvorgangs wird mittels Sensordaten vergleichen, ob die tatsächliche Trajektorie von der optimierten Trajektorie abweicht. im Falle einer Abweichung werden dem Fahrer haptische Rückmeldungen gegeben, die ihn dazu bringen sollen, das Fahrzeug wieder in die Nähe der optimierten Trajektorie zu bringen.

Aus EP 1847444 A1 ist ein ähnliches Verfahren bekannt, auch hier werden Soll- und Ist-Trajektorie während des Einparkvorgangs verglichen und dem Fahrer bei einer Abweichung entsprechende Informationen zur Verfügung gestellt.

US 2003/0045973 A1 beschreibt ein bildgebendes Verfahren zur Unterstützung eines Einparkvorgangs, bei dem eine freie Parklücke und eine optimierte Einparktrajektorie auf einem Kamerabild angezeigt werden. Während des Einparkvorgangs werden durch entsprechende Sensoren Lenkwinkel und Fahrzeugposition erfasst und die tatsächliche Einparktrajektorie wird ebenfalls auf dem Kamerabild dargestellt. Durch die Darstellung kann der Fahrer seinen Einparkvorgang gegebenenfalls korrigieren. Bei Abweichungen von der Soll-Trajektorie kann auch ein Lenkbefehl direkt an das Fahrzeug ausgegeben werden, der das Fahrzeug auf die Solltrajektorie zurückbringt.

Aus FR 2 909 964 A1 ist ein Verfahren zu Unterstützung eines Einparkvorgangs eines Fahrzeugs bekannt, wobei während des Einparkvorgangs mindestens ein Sensor-Signal von einem Steuergerät ausgewertet wird und anhand des Sensor-Signals ein Soll-Ist-Vergleich zwischen einer während des Einparkvorgangs vom Fahrzeug beschriebenen Trajektorie und einer auf Basis des gespeicherten Sensor-Signals errechneten optimierten Trajektorie durchgeführt wird. Bei Abweichungen wird ein haptisches Signal an den Fahrer abgegeben.

### Offenbarung der Erfindung

### Vorteile der Erfindung

Die erfindungsgemäße Vorgehensweise mit den kennzeichnenden Merkmalen der unabhängigen Ansprüche weist demgegenüber den Vorteil auf, dass ein Einparkvorgang eines Fahrzeugs anhand von mindestens einem Sensor-Signal von einem Steuergerät gespeichert und/oder ausgewertet wird und anhand der gespeicherten Sensor-Signale eine Unterstützung des Einparkvorgangs in Form von Optimierungshinweisen ermittelt werden kann. Hierbei werden die Optimierungshinweise nicht direkt während des Einparkvorgangs ermittelt und dem Benutzer akustisch und/oder optisch mitgeteilt, sondern nach erfolgter Datenübertragung auf einem vom Steuergerät des Fahrzeugs separaten Rechner. Die während des Einparkvorgangs gespeicherten Sensor-Signale werden in einem Soll-Ist-Vergleich ausgewertet und die Ergebnisse dem Benutzer textbasiert und/oder grafisch dargestellt.

Der Benutzer kann nach mindestens einem Einparkvorgang diesen analysieren und sich anhand von verschiedenen Kriterien Optimierungshinweise ausgeben lassen. Dies hat den Vorteil gegenüber dem Stand der Technik, dass der Benutzer in aller Ruhe, also beispielsweise ohne auf den Verkehr achten zu müssen, und ohne ein durch die Einparksituation bedingtes Sicherheitsrisiko die Analyse durchführen kann.

Vorteilhafterweise kann der Benutzer aufgrund der Optimierungshinweise sein Einparkverhalten verbessern und daraus resultierend einen geringeren Kraftstoffverbrauch bzw. Reifenabrieb, sowie eine Verkürzung der Einparkzeit und/oder eine geringere Beeinflussung und Gefährdung des restlichen Verkehrs realisieren.

Die Verbesserung des Einparkverhaltens führt beim Benutzer zu einer Steigerung des Wohlbefindens während Einparkvorgängen, hierdurch kann der Benutzer das optimierte Einparkverhalten auch bei Fahrzeugen ohne das erfindungsgemäße System anwenden.

Ein weiterer Vorteil besteht in der Möglichkeit, die kumulierten gespeicherten Sensor-Signale aus verschiedenen Einparkvorgängen zu speichern und diese zu analysieren. Daraus lassen sich Rückschlüsse beispielsweise auf den Optimierungsgrad ziehen und/oder weiteres Potential in Bezug auf einen geringeren Materialverbrauch identifizieren.

Ein weiterer Vorteil der Speicherung von Sensor-Signalen während des Einparkvorgangs ist in der Speicherung und/oder Auswertemöglichkeit getrennt nach verschiedenen Benutzern zu sehen. Hierfür ist es denkbar, dass unterschiedliche Speicher für die einzelnen Benutzer verwendet werden, um eine Zuordnung der jeweiligen Einparkvorgänge zu ermöglichen. Denkbar ist auch eine automatische Erkennung des Benutzers anhand von verschiedenen Sensor-Signalen im Steuergerät wie beispielsweise Sitzposition, Lenkradposition, Gewicht und/oder Fahrstil des Benutzers. Denkbar ist auch eine manuelle Auswahl des aktuellen Benutzers durch den Benutzer selbst, beispielsweise durch Eingabe einer Identifikationsnummer und/oder der Auswahl eines möglichen Eintrages einer Liste, welche dem Benutzer zur Verfügung gestellt wird ggf. in Kombination mit einer persönlichen Geheimzahl. Denkbar ist auch eine Unterscheidung der Benutzer anhand ihrer Fahrzeugschlüssel, die beispielsweise durch eine unterschiedliche Kodierung den Benutzer kennzeichnen.

Alle genannten Möglichkeiten zur Identifikation des aktuellen Benutzers können beispielsweise während des Aufschließvorgangs des Fahrzeuges, nach und/oder während eines Neustarts des Fahrzeuges, während des aktuellen Fahrzyklus und/oder während eines jeweiligen Einparkvorgangs durchgeführt werden.

Weitere vorteilhafte Ausführungsformen der vorliegenden Erfindung sind Gegenstand der Unteransprüche.

So können beispielsweise zur Erfassung des mindestens einen Sensor-Signals Ultraschall-, Radar- und/oder Infrarotsensoren, kapazitive Sensoren, LIDAR-Sensoren (Light detection and ranging) und/oder Umfeldkameras eingesetzt werden. Das mindestens eine Sensor-Signal kann vorzugsweise ein Lenkwinkel- und/oder ein Radimpulszählersignal sein. Abhängig von den verwendeten Sensoren sind unterschiedliche Umsetzungen möglich, so kann beispielsweise bei Verwendung von Sensoren mit einer höheren Messgenauigkeit eine weitere Optimierung des Einparkvorgangs vorgenommen werden.

Die Datenübertragung vom Steuergerät auf einen vom Steuergerät separaten Rechner kann mittels einer Schnittstelle, beispielsweise eines USB-Anschlusses und/oder ein Funkverbindungsmoduls erfolgen. Vorteilhafterweise kann die Datenübertragung automatisiert und/oder manuell erfolgen. Der Einsatz des USB-Anschlusses und/oder des Funkverbindungsmoduls erlaubt die komfortable, für den Benutzer leicht verständliche und/oder schnelle Datenübertragung.

Das Steuergerät und/oder ein vom Steuergerät separater Rechner enthalten vorzugsweise wenigstens einen elektrischen Speicher, in welchem die Verfahrensschritte als Computerprogramm abgelegt sind.

Das erfindungsgemäße Computerprogramm sieht vor, dass alle Schritte des erfindungsgemäßen Verfahrens ausgeführt werden, wenn es in einem Steuergerät und/oder einem vom Steuergerät separaten Rechner abläuft.

Das erfindungsgemäße Computerprogrammprodukt mit einem auf einem maschinenlesbaren Träger gespeicherten Programmcode führt das erfindungsgemäße Verfahren aus, wenn das Programm in einem Steuergerät und/oder einem vom Steuergerät separaten Rechner abläuft.

### Kurzbeschreibung der Figuren

Ausführungsbeispiele der Erfindung sind in der Zeichnung dargestellt und in der nachfolgenden Beschreibung näher erläutert.

Es zeigt:
- Figur 1: eine Einparksituation, die für das erfindungsgemäße Verfahren relevant ist;
- Figur 2: ein Flussdiagramm einer Ausführungsform des erfindungsgemäßen Verfahrens; und
- Figur 3: eine Ausführungsform einer Vorrichtung geeignet zur Ausführung des erfindungsgemäßen Verfahrens.

### Detaillierte Beschreibung der Ausführungsbeispiele

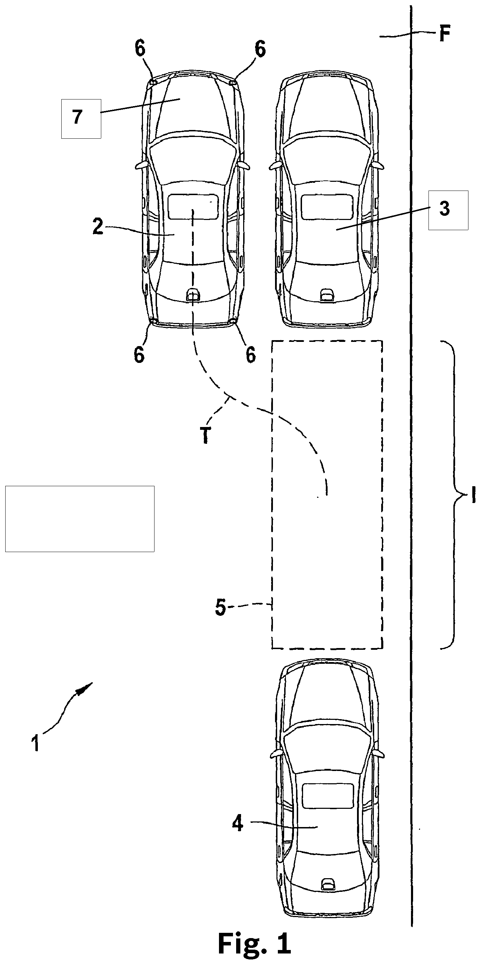

Die in Fig. 1 dargestellte Straßensituation 1 zeigt ein stehendes Fahrzeug 2, eine Parklücke 5, die sich zwischen zwei geparkten Fahrzeugen 3 und 4 an einer Fahrbahn F befindet und eine bestimmte Länge I sowie ein durch das Fahrzeug 2 während des Einparkvorgangs realisierte Trajektorie T. Das stehende Fahrzeug 2 besitzt mindestens einen Sensor 6 und/oder 7. Als Sensor 6 können beispielsweise Ultraschall-, Radar- und/oder Infrarotsensoren, kapazitive Sensoren, LIDAR-Sensoren (Light detection and ranging) und/oder Umfeldkameras eingesetzt werden. Sensor 7 kann beispielsweise ein Lenkwinkel- und/oder ein Radimpulszählersignal erfassen.

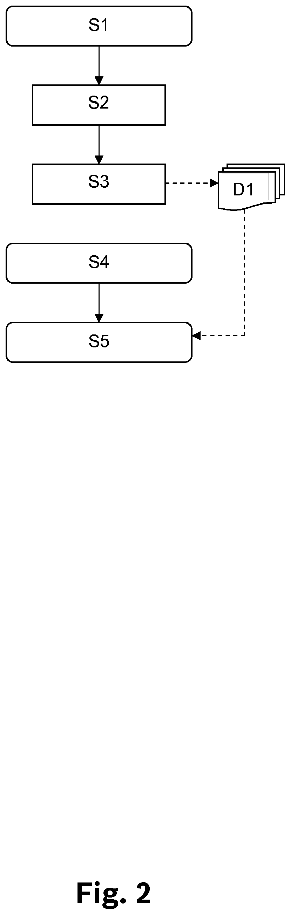

In Fig. 2 ist ein Flussdiagramm des erfindungsgemäßen Verfahrens dargestellt. In Schritt S1 wird ein Verfahren zur Parklückenvermessung gestartet. In Schritt S2 werden unter Zuhilfenahme von mindestens einem Sensor-Signal Merkmale der Parklücke 5 ermittelt und/oder Sensor-Signale des Fahrzeugs 2 erfasst. Ein mögliches Merkmal der Parklücke 5 kann beispielsweise die Länge l und das Sensor- Signal ein Lenkwinkel- und/oder ein Radimpulszählersignal sein.

In Schritt S3 werden die erfassten Sensor-Signale in einem Speicher D1 für eine weitere Verarbeitung gespeichert. In einem weiteren Schritt S4 werden die gespeicherten Sensor-Signale an einen vom Steuergerät separaten Rechner übertragen. In Schritt S5 wird anhand der gespeicherten Daten mindestens ein mögliches Szenario eines Einparkvorgangs und einer Einparkumgebung erstellt.

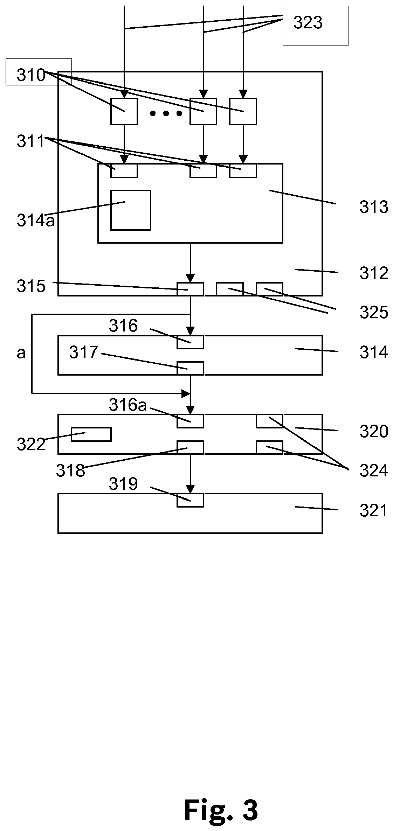

Fig. 3 zeigt ein technisches Umfeld des erfindungsgemäßen Verfahrens. In einem Fahrzeug 312 wird mindestens ein Sensor-Signal 323 von mindestens einem Sensor 310 erfasst und über mindestens eine Schnittstelle 311 einem Steuergerät 313 zur Verfügung gestellt. Die Signale können dem Steuergerät 313 direkt über die Schnittstelle 311 übermittelt werden oder alternativ über ein Bussystem wie beispielsweise einem CAN-Bus. Das Steuergerät 313 enthält mindestens einen Speicher 314a zur Speicherung der Sensor-Signale und mindestens eine Schnittstelle 315, 325.

Die Speicherung des Sensor-Signals kann entweder direkt in dem im Steuergerät vorhandenen Speicher 314a oder über die im Steuergerät 313 vorhandene Schnittstelle 315 erfolgen, beispielsweise über eine kabelgebundene Verbindung wie über eine USB-Schnittstelle (Universal Serial Bus) und/oder über eine Funkverbindung wie Bluetooth (Kurzstreckenfunk) und/oder WLAN (Wireless LAN). Mittels der im Steuergerät 313 vorhandenen Schnittstellen 315 und einer Schnittstelle 316a lassen sich die gespeicherten Sensor-Signale direkt auf einen vom Steuergerät 313 separaten Rechner 320 mit einem Speicher 322 übertragen. Alternativ und/oder in Verbindung mit der direkten Datenübertragung können über die Steuergeräteschnittstelle 315 und einer Speichermittel-Schnittstelle 316 auch beispielsweise ein Speichermittel 314 mit dem Steuergerät 313 verbunden werden und die gespeicherten Sensor-Signale auf das Speichermittel 314 übertragen bzw. die gespeicherten Sensor-Signale direkt auf das Speichermittel 314 gespeichert werden. Ein entsprechendes Speichermittel kann beispielsweise ein USB-Stick, ein Flash-Speicher, ein PDA, ein Smartphone, etc. sein. Anschließend können die gespeicherten Sensor-Signale von dem Speichermittel 314 mittels der Schnittstelle 316a auf den vom Steuergerät separaten Rechner 320 mit dem Speicher 322 über eine weitere Speichermittel-Schnittstelle 317 übertragen werden.

Die Datenübertragung kann zwischen dem Steuergerät 313 und den vom Steuergerät 313 separaten Rechner 320 bzw. dem Speichermittel 314 automatisch und/oder manuell erfolgen.

Die gespeicherten Sensor-Signale können nachfolgend für ein Parkassistenz-Verfahren oder ein Parkpilot-Verfahren zur Ermittlung eines Soll-Ist-Vergleichs zwischen einer während des Einparkvorgangs in die Parklücke 5 realisierte Trajektorie T des Fahrzeuges 2 und einer auf Basis des gespeicherten Sensor-Signal errechneten optimierten Trajektorie herangezogen werden.

Der Soll-Ist-Vergleich wird anhand des mindestens einen Sensor-Signals auf dem vom Steuergerät 313 separaten Rechner 320 durchgeführt. Hierzu wird anhand des gespeicherten Sensor-Signals ein Szenario des Einparkvorgangs und der Einparkumgebung dargestellt.

Die tatsächlich während des Einparkvorgangs beschriebene Trajektorie T dient hierzu als eine Ist-Trajektorie. Die anhand des gespeicherten Sensor-Signals dargestellte Einparkumgebung dient als Basis für die Berechnung einer Soll-Trajektorie. Die Soll-Trajektorie stellt eine optimierte Trajektorie dar; denkbar für eine Optimierung sind hierfür Kriterien wie beispielsweise ein kürzester Einparkweg, geringste Lenkradbewegungen und/oder ein zeitlich möglichst kurzer Einparkvorgang.

Der Soll-Ist-Vergleich kann Hinweise zur Optimierung des Einparkvorgangs geben. Hierzu wird das Ergebnis des Soll-Ist-Vergleichs über Schnittstellen 318, 319 textbasiert und/oder grafisch dargestellt. Denkbar ist beispielsweise eine grafische Darstellung 321 der Unterschiede zwischen der während des Einparkvorgangs beschriebenen Ist-Trajektorie und der berechneten optimierten Trajektorie sowie textbasierte und/oder grafisch hervorgehobene Hinweise, welche Änderung zu welchem Zeitpunkt des Einparkvorgangs eine Verbesserung und Optimierung des Einparkvorgangs erzielt hätte. Hierzu ist es denkbar, dass der Benutzer zwischen den verschiedenen Kriterien wählen kann und die jeweiligen Optimierungshinweise dargestellt bekommt.

Aus den Optimierungshinweisen resultierend kann ein geringeren Kraftstoffverbrauch bzw. des Reifenabriebs, sowie eine Verkürzung der Einparkzeit und/oder eine geringere Beeinflussung und Gefährdung des restlichen Verkehrs erreicht werden.

Der Soll-Ist-Vergleich kann nicht nur auf Basis der gespeicherten Sensor-Signale sondern auch als ein Soll-Ist-Vergleich auf Basis von kumulierten gespeicherten Sensor-Signalen aus mehreren, ggf. zu verschiedenen Zeitpunkten aufgenommenen Datenübertragungen durchgeführt werden.

Das Verfahren ist nicht nur für in der dargestellten Straßensituation 1 durchgeführte Einparkvorgänge geeignet, sondern auch für andere Straßensituationen wie beispielsweise mit senkrecht zur Fahrbahn ausgerichteten Parklücken.

Der Soll-Ist-Vergleich auf dem vom Steuergerät 312 separaten Rechner 320 kann mittels einer Software durchgeführt werden, die hierzu mittels mindestens einer Schnittstelle 324 auf den Rechner 320 übertragen werden kann. Der Rechner 320 kann ein beliebiger Rechner mit mindestens einer entsprechenden Rechenleistung zur Berechung und/oder Darstellungsmöglichkeit des Soll-Ist-Vergleichs wie ein PC, ein Notebook, Netbook, Smartphone, usw. sein.

## Patentansprüche

1. Verfahren zur Unterstützung eines Einparkvorgangs eines Fahrzeugs (2) in eine Parklücke (5), wobei während des Einparkvorgangs mindestens ein Sensor-Signal erfasst und von einem Steuergerät ausgewertet und gespeichert wird, wobei unter Zuhilfenahme des mindestens einen Sensor-Signals Merkmale der Parklücke (5) ermittelt und eine während des Einparkvorgangs vom Fahrzeug beschriebenen Trajektorie des Fahrzeugs (2) erfasst werden und anhand des gespeicherten Sensor-Signals ein Soll-Ist-Vergleich zwischen einer während des Einparkvorgangs vom Fahrzeug beschriebenen Trajektorie und einer auf Basis des gespeicherten Sensor-Signals errechneten optimierten Trajektorie durchgeführt wird,
**dadurch gekennzeichnet,**
**dass** die gespeicherten Sensor-Signale mittels einer in dem Steuergerät vorhandenen Schnittstelle auf einem vom Steuergerät separaten Rechner, insbesondere einen PC, übertragen wird.

2. Verfahren nach Anspruch 1, **dadurch gekennzeichnet, dass** das gespeicherte Sensor-Signal den Abstand zu mindestens einem Objekt repräsentiert, das den Parkraum begrenzt und/oder sich in der zum Einparken genutzten Trajektorie befindet.

3. Verfahren nach einem der Ansprüche 1 oder 2, **dadurch gekennzeichnet, dass** das Sensor-Signal ein Lenkwinkelsignal und/oder ein Radimpulszählersignal ist.

4. Verfahren nach einem der Ansprüche 2 oder 3, **dadurch gekennzeichnet, dass** zur Erfassung des Abstandes zu dem mindestens einen Objekt Ultraschall-, Radar- und/oder Infrarotsensoren, kapazitive Sensoren, LIDAR-Sensoren und/oder Umfeldkameras eingesetzt werden.

5. Verfahren nach Anspruch 1, **dadurch gekennzeichnet, dass** die Schnittstelle beispielsweise ein USB-Anschluss und/oder ein Funkverbindungsmodul ist und die Datenübertragung manuell und/oder automatisiert, mit einem vom Steuergerät separaten Rechner erfolgt.

6. Verfahren nach einem der Ansprüche 1 bis 5, **dadurch gekennzeichnet, dass** der Soll-Ist-Vergleich auf dem vom Steuergerät separaten Rechner anhand des mindestens einen gespeicherten Sensor-Signals durchgeführt wird.

7. Verfahren nach Anspruch 6, **dadurch gekennzeichnet, dass** das Ergebnis des durchgeführten Soll-Ist-Vergleichs textbasiert und/oder grafisch die Unterschiede zwischen der während des Einparkvorgangs vom Fahrzeug beschriebenen Trajektorie und einer auf Basis des gespeicherten Sensor-Signals errechneten optimierten Trajektorie darstellt und/oder Hinweise zur Optimierung gibt.

8. Computerprogramm mit Programmcodemitteln, um alle Schritte eines Verfahrens nach einem der Ansprüche 1 bis 7 durchzuführen, wenn das Computerprogramm auf einem Computer oder einer entsprechenden Recheneinheit ausgeführt wird.

9. Computerprogrammprodukt mit Programmcodemitteln, die auf einem computerlesbaren Datenträger gespeichert sind, um alle Schritte eines Verfahrens nach einem der Ansprüche 1 bis 7 durchzuführen, wenn ein Computerprogramm nach Anspruch 8 auf einem Computer oder einer entsprechenden Recheneinheit ausgeführt wird.

## Claims

1. Method for assisting a process of parking a vehicle (2) in a parking space (5), at least one sensor signal being captured during the parking process and being evaluated and stored by a control device, features of the parking space (5) being determined with the aid of the at least one sensor signal and a trajectory of the vehicle (2) described by the vehicle during the parking process being captured, and a desired/actual comparison between a trajectory described by the vehicle during the parking process and an optimized trajectory calculated on the basis of the stored sensor signal being carried out using the stored sensor signal,
**characterized in that**
the stored sensor signals are transmitted to a computer separate from the control device, in particular a PC, by means of an interface present in the control device.

2. Method according to Claim 1, **characterized in that** the stored sensor signal represents the distance to at least one object which bounds the parking space and/or is on the trajectory used for parking.

3. Method according to either of Claims 1 and 2, **characterized in that** the sensor signal is a steering angle signal and/or a wheel pulse counter signal.

4. Method according to either of Claims 2 and 3, **characterized in that** ultrasonic, radar and/or infrared sensors, capacitive sensors, LIDAR sensors and/or environment cameras are used to capture the distance to the at least one object.

5. Method according to Claim 1, **characterized in that** the interface is a USB connection and/or a radio connection module, for example, and data are transmitted manually and/or in an automated manner using a computer separate from the control device.

6. Method according to one of Claims 1 to 5, **characterized in that** the desired/actual comparison is carried out on the computer separate from the control device using the at least one stored sensor signal.

7. Method according to Claim 6, **characterized in that** the result of the desired/actual comparison which has been carried out represents, in a text-based and/or graphical form, the differences between the trajectory described by the vehicle during the parking process and an optimized trajectory calculated on the basis of the stored sensor signal and/or provides suggestions for optimization.

8. Computer program having program code means for carrying out all steps of a method according to one of Claims 1 to 7 when the computer program is executed on a computer or a corresponding computing unit.

9. Computer program product having program code means stored on a computer-readable data storage medium for carrying out all of the steps of a method according to one of Claims 1 to 7 when a computer program according to Claim 8 is executed on a computer or a corresponding computing unit.

## Revendications

1. Procédé d'assistance à une manoeuvre de stationnement d'un véhicule (2) dans un emplacement de stationnement (5), dans lequel au cours de la manoeuvre de stationnement,
au moins un signal de capteur est saisi, évalué par un appareil de commande et conservé en mémoire,
des caractéristiques de l'emplacement de stationnement (5) sont saisies à l'aide du ou des signaux de capteur et une trajectoire décrite par le véhicule (2) lors de la manoeuvre de stationnement du véhicule est saisie et
une comparaison consigne-réalité entre la trajectoire décrite par le véhicule pendant la manoeuvre de stationnement et une trajectoire optimisée calculée sur la base du signal de capteur conservé en mémoire est réalisée à l'aide du signal de capteur conservé en mémoire,
**caractérisé en ce que**
les signaux de capteur conservés en mémoire sont transférés à un calculateur séparé de l'appareil de commande, en particulier un PC, au moyen d'une interface prévue dans l'appareil de commande.

2. Procédé selon la revendication 1, **caractérisé en ce que** le signal de capteur conservé en mémoire représente la distance par rapport à au moins un objet qui délimite l'espace de stationnement et/ou qui se situe sur la trajectoire utilisée pour la manoeuvre de stationnement.

3. Procédé selon l'une des revendications 1 ou 2, **caractérisé en ce que** le signal de capteur est un signal d'angle de braquage et/ou un signal de compteur d'impulsions de roue.

4. Procédé selon l'une des revendications 2 ou 3, **caractérisé en ce que** pour saisir la distance par rapport à l'objet ou aux objets, des capteurs à ultrasons, des capteurs radar et/ou à infrarouge, des capteurs capacitifs, des capteurs lidar et/ou des caméras observant l'environnement sont utilisés.

5. Procédé selon la revendication 1, **caractérisé en ce que** l'interface est par exemple une borne USB et/ou un module de liaison radio et le transfert des données s'effectue manuellement et/ou de manière automatique à l'aide d'un calculateur séparé de l'appareil de commande.

6. Procédé selon l'une des revendications 1 à 5, **caractérisé en ce que** la comparaison consigne-réalité est exécutée sur le calculateur séparé de l'appareil de commande à l'aide du ou des signaux de capteur conservés en mémoire.

7. Procédé selon la revendication 6, **caractérisé en ce que** le résultat de la comparaison réalisée entre la consigne et la réalité représente en texte et/ou graphiquement les différences entre la trajectoire décrite par le véhicule pendant sa manoeuvre de stationnement et une trajectoire optimisée calculée sur la base du signal de capteur conservé en mémoire, et/ou donne des indications en vue de cette optimisation.

8. Programme informatique doté de moyens de code de programme permettant de mettre en oeuvre toutes les étapes d'un procédé selon l'une des revendications 1 à 7 lorsque le programme informatique est exécuté sur un ordinateur ou une unité de calcul appropriée.

9. Produit de programme informatique présentant des moyens de code de programme et conservés sur un support de données lisibles par un ordinateur, pour mettre en oeuvre toutes les étapes d'un procédé selon l'une des revendications 1 à 7 lorsqu'un programme informatique selon la revendication 8 est exécuté sur un ordinateur ou une unité de calcul appropriée.
